## Europäisches Patentamt

## European Patent Office

## Office européen des brevets

(19)

(11) **EP 1 020 085 B1**

(12)

# FASCICULE DE BREVET EUROPEEN

(45) Date de publication et mention
de la délivrance du brevet:
**29.05.2002 Bulletin 2002/22**

(21) Numéro de dépôt: **98946540.6**

(22) Date de dépôt: **01.10.1998**

(51) Int Cl.⁷: **H04N 17/00**

(86) Numéro de dépôt international:
**PCT/FR98/02100**

(87) Numéro de publication internationale:
**WO 99/18736 (15.04.1999 Gazette 1999/15)**

(54) **PROCEDE D'EVALUATION DE LA DEGRADATION D'UNE IMAGE VIDEO INTRODUITE PAR UN SYSTEME DE CODAGE ET/OU DE STOCKAGE ET/OU DE TRANSMISSION NUMERIQUE**

VERFAHREN ZUR BEWERTUNG DER QUALITÄTSMINDERUNG EINES VIDEOBILDES HERBEIGEFÜHRT DURCH EIN CODIERUNGSSYSTEM UND/ODER EIN SPEICHERSYSTEM UND/ODER EIN DIGITALES ÜBERTRAGUNGSSYSTEM

METHOD FOR ASSESSING THE DEGRADATION OF A VIDEO IMAGE INPUT BY A CODING AND/OR STORAGE AND/OR TRANSMISSION SYSTEM

(84) Etats contractants désignés:
**DE ES GB IT NL SE**

(30) Priorité: **06.10.1997 FR 9712414**

(43) Date de publication de la demande:
**19.07.2000 Bulletin 2000/29**

(73) Titulaire: **TELEDIFFUSION DE FRANCE**
**75015 Paris (FR)**

(72) Inventeurs:
• **BAINA, Jamal**
**F-54000 Nancy (FR)**
• **BRETILLON, Pierre**
**F-57000 Metz (FR)**

(74) Mandataire: **Jacquard, Philippe Jean-Luc et al**
**CABINET ORES,**
**6, Avenue de Messine**
**75008 Paris (FR)**

(56) Documents cités:
**WO-A-93/19434**           **WO-A-95/03674**
**US-A- 5 214 508**        **US-A- 5 574 500**

• **DE QUEIROZ R ET AL: "WAVELET TRANSFORMS IN A JPEG-LIKE IMAGE CODER" IEEE TRANSACTIONS ON CIRCUITS AND SYSTEMS FOR VIDEO TECHNOLOGY, vol. 7, no. 2, avril 1997, pages 419-424, XP000687660 cité dans la demande**

**EP 1 020 085 B1**

**Description**

La présente invention a pour objet un procédé d'évaluation de la dégradation d'une image vidéo, introduite par un système de codage et/ou de stockage et/ou de transmission numérique, notamment un système mettant en oeuvre un codage et/ou un stockage et/ou une transmission de signal video numérique avec un bas débit.

Les dégradations sont en général dues aux erreurs introduites par les algorithmes de réduction de débit et/ou par les liaisons défectueuses de transmission ou bien encore aux défauts des codeurs et des décodeurs.

La numérisation des signaux vidéo a ouvert la possibilité de pouvoir copier, stocker ou transmettre l'information vidéo en maintenant une qualité constante.

Cependant, la grande quantité d'information véhiculée par les images vidéo nécessite en pratique l'utilisation de méthodes de compression numérique pour rédduire le débit binaire.

Une méthode de compression très répandue dans le domaine de la vidéo est décrite dans la norme ISO/CEI 13918 MPEG2. Cet algorithme est dit du type "avec pertes", car l'image restituée après le décodage n'est pas identique à l'original. Afin de maintenir une qualité acceptable pour le téléspectateur final, les algorithmes de réduction de débit tiennent compte des propriétés perceptuelles du système humain de vision. En dépit de ceci, les contraintes imposées de débit ou de largeur de bande disponible pour la transmission ainsi que le contenu du signal vidéo impliquent l'apparition de dégradations caractéristiques sur le signal après décodage. Ces dégradations introduites par la chaîne, par exemple MPEG2, influent directement sur la qualité perçue de l'image finale.

L'évaluation automatique de la qualité des signaux audiovisuels a un large champ d'applications dans la chaîne de télévision numérique : production, distribution, et évaluation des performances des systèmes.

Par ailleurs, les dispositifs existants ont été élaborés pour des tests en laboratoires et ne sont pas adaptés pour la télésurveillance des réseaux de distribution.

Des séquences d'images codées MPEG et transmises à bas débit pour la diffusion de la télévision numérique ou pour d'autres applications multimédia, vont présenter un certain nombre de défauts ou de déformations par rapport à la séquence originale. En effet, une liste non exhaustive de dégradations visibles peut être dressée. Les plus perceptibles d'entre elles sont les erreurs granulaires, les déformations de contours, les pertes d'information, les contours "exotiques", les effets de bloc, etc.. Cependant, des erreurs de transmission peu importantes peuvent se traduire par des effets plus ou moins localisés sur l'image. En cas de perturbation importante, elles peuvent se traduire par des difficultés d'accès aux informations, par exemple coupures de service ou gels d'images pendant un temps plus ou moins long selon la perturbation. L'envergure des erreurs dépend du niveau de pertinence et de la structure des données qu'elles affectent : mots de synchronisation, vecteurs mouvement, images codées avec ou sans prédiction ou images de base pour les prédictions. En plus des coupures ou gels d'images, les dégradations constatées se matérialisent par des blocs ou des macro-blocs erronés ou mal positionnés. Ceci a pour effet de propager les dégradations sur toute la séquence vidéo jusqu'à l'image codée sans prédiction, donc codée indépendamment des autres.

Un procédé d'évaluation a été proposé par le NTIA (National Telecommunications and Information Administration) dans l'article de A.A. WEBSTER et Collaborateurs, intitulé "An objective videoquality assesment system based on human perception" et publié en juin 1993 dans la revue SPIE vol.13, p.15-26.

Ce procédé met en oeuvre une analyse des images dégradées et des images d'origine, après les avoir filtrées par deux opérateurs de SOBEL (matrices 3x3) vertical et horizontal. L'image filtrée est obtenue par convolution en faisant glisser les matrices de SOBEL horizontalement et verticalement, et les résultats obtenus représentent les gradients verticaux et horizontaux de l'image. En d'autres termes, l'image filtrée met en valeur les contours verticaux et horizontaux contenus dans l'image initiale (non filtrée).

Une mesure basée sur cette information permet de mettre en évidence le changement de contenu entre l'entrée du système vidéo et sa sortie.

Le procédé proposé par le NTIA met en oeuvre deux paramètres :

-   d'une part, l'information spatiale SI qui représente l'écart moyen mesuré sur les pixels de l'image filtrée par l'opérateur de SOBEL. Il s'agit ici de déterminer l'écart moyen au niveau des contours de l'image filtrée, en considérant que les contours sont importants pour la vision et qu'ils sont affectés par les différents traitements des systèmes numériques à réduction de débit ;
-   d'autre part, l'information temporelle TI qui représente l'écart-type de l'image de différence entre deux images successives, cet écart-type étant calculé à partir des différences entre les valeurs des mêmes pixels de deux trames successives. Le paramètre TI peut révéler un mouvement saccadé dû à un défaut du codeur.

Le procédé proposé par le NTIA met en oeuvre un calcul comparatif des paramètres SI et TI sur le signal vidéo numérique, entre une image d'entrée et une image de sortie d'un système.

Ce procédé présente un certain nombre d'inconvénients.

Le filtre de SOBEL conserve seulement certaines fréquences de l'image qui permettent de prendre en compte la perte de contour, ce qui fait que la perte de définition qui pourrait être prise en compte est celle qui se situe dans la gamme des fréquences conservées. En d'autres termes, la perte de définition ne peut être prise en compte que de manière partielle.

D'autre part, le paramètre SI prend en compte des défauts qui tendent à se compenser. En effet, la perte d'information de l'image tend à faire diminuer le paramètre SI alors que les faux contours et les effets de bloc tendent au contraire à le faire augmenter, ce qui fait que le paramètre SI n'est significatif que si l'un ou l'autre des phénomènes est dominant.

Enfin, la méthode de calcul des paramètres SI et TI, en utilisant un écart type calculé de manière globale sur l'image entière, réduit de manière drastique l'impact sur ces paramètres des dégradations localisées.

Une autre méthode d'évaluation de la qualité de l'image codée est décrite dans le document US-A-5 574 500.

La présente invention a pour objet un procédé qui permet de remédier au moins en partie aux défauts précités.

Le procédé selon la présente invention exploite une transformée, par blocs, par exemple la transformée en cosinus discrète utilisée notamment dans le standard MPEG, pour mettre en valeur des signatures caractéristiques des défauts identifiés. Cette approche originale permet non seulement de mesurer finement les erreurs introduites, mais elle permet également de tenir compte du contenu initial du signal vidéo et des algorithmes mis en oeuvre dans MPEG.

Les transformations par blocs d'une image (transformée de Fourier, transformée en cosinus discrète TCD, etc...) sont obtenues par l'opération :

[Fn,m] = [T] . [fn,m] . [T]$^t$ où f(x,y) désigne le bloc d'image à transformer et T(x,y) la matrice de la transformation. Une autre transformée par blocs est réalisée à partir de la transformée en ondelettes de l'image, en réorganisant les coefficients d'ondelettes de manière à obtenir des blocs transformés ayant la taille désirée et en particulier de même taille que les blocs obtenus par les méthodes précitées. Un tel mode de réorganisation est indiqué dans l'article de R. de QUEIROZ et Collaborateurs, intitulé "Wavelet transforms in a JPEG - like Image Coder", publié en avril 1997 dans la revue IEEE Transactions On Circuits and Systems for Video Technology, vol. 7 n°2 p. 419-424.

L'idée de base de l'invention est en particulier de réaliser des calculs sur les blocs selon lesquels l'image transmise a été codée, de manière à générer un paramètre significatif exempt de l'effet de bloc.

L'invention concerne ainsi un procédé d'évaluation de la dégradation d'une image vidéo codée par blocs de points images ou pixels, cette dégradation étant générée par un système de codage et/ou de stockage et/ou de transmission produisant une image de sortie à partir d'une image d'entrée, caractérisé en ce qu'il comporte les étapes suivantes :

a) sélectionner une image d'entrée et déterminer une activité spatiale (SA) de l'image d'entrée dans une fenêtre d'analyse représentant au moins une partie de l'image qui présente un ensemble de dits blocs de points images ou pixels, cette détermination mettant en oeuvre les sous-étapes suivantes :

i) déterminer pour chaque bloc (n,m) du dit ensemble de blocs de pixels, les coefficients transformés Fn,m (i, j) par une transformée par blocs selon les dits blocs

ii) déterminer à partir des coefficients transformés Fn,m (i,j), l'activité spatiale bsa de chaque bloc dudit ensemble de blocs de pixels

iii) déterminer à partir de l'activité spatiale de bsa de chaque bloc l'activité spatiale globale SA$_1$ de l'ensemble des blocs de pixels constituant la fenêtre d'analyse

b) sélectionner l'image de sortie correspondant à l'image d'entrée et déterminer ladite activité spatiale globale SA$_2$ de l'image de sortie dans ladite fenêtre d'analyse, en mettant en oeuvre les sous-étapes a i) à a iii)

c) comparer l'activité spatiale globale (SA$_2$) de l'image de sortie dans la fenêtre d'analyse et l'activité spatiale globale (SA$_1$) de l'image d'entrée dans la fenêtre d'analyse.

L'activité spatiale bsa d'un bloc (n,m) peut être déterminée par la formule suivante :

$$bsa_{n,m} = \left( \sum_{i=0}^{7} \sum_{j=0}^{7} F_{n,m}^2(i,j) \right) - \left( F_{n,m}^2(0,0) \right)$$

L'activité spatiale bsa peut être obtenue comme indiqué ci-dessus par combinaison des carrés des composantes de l'image à partir de la quasi-totalité des composantes de la TCD. Toute autre fonction de combinaison des composantes de la transformée utilisée est applicable pour caractériser le contenu de l'image. Une fonction plus générale est :

$$bsa_{n,m} = \left( \sum_{i=0}^{7} \sum_{j=0}^{7} \left( k(i,j).F_{n,m}(i,j) \right)^{p} \right) - \left( k(0,0).F_{n,m}(0,0) \right)^{p}$$

où $k(i,j)$ est un coefficient constant de pondération de la composante i,j utilisée, et p une constante.

Il y a plusieurs possibilités pour choisir les constantes $k(i,j)$, et le choix de l'un ou l'autre se fait en fonction de l'application recherchée. En effet, la fonction $k(i,j)$ est choisie suivant la caractéristique à mettre en exergue : tenir compte du système visuel ou extraire une partie de l'information pertinente. Les cas suivants sont proposés :

1) le procédé numéro un est à utiliser lorsque l'on privilégie une bonne corrélation avec la perception humaine.
Les valeurs des constantes $k(i,j)$ sont initialisées en fonction de l'importance relative des coefficients de la transformée pour l'oeil humain, notamment sa sensibilité fréquentielle, afin de fournir un paramètre d'activité représentatif de ce qui est perçu. Par exemple, dans le cas de la TCD, on prend $k(i,j) = 1/Q(i,j)$. Les $Q(i,j)$ sont les composantes de la matrice de quantification exploitée pour la réduction de débit, indiquées dans le document suivant qui est extrait de la norme MPEG-2 : ISO/IEC CD 13818-2 : "Information technology - Generic coding of moving pictures and associated audio information - Part 2 : vidéo", Dec 1993, p 45, § 6.3.7.
2) le second procédé est utilisé lorsque les coefficients par exemple TCD affectés par la dégradation sont identifiables. Les constantes $k(i,j)$ sont choisies de manière à éliminer certains coefficients de la transformée utilisée. En effet, la pondération $k(i,j)$ est utilisée pour retenir les coefficients les plus affectés ou sensibles à une dégradation donnée. Il s'agit d'une matrice binaire affectant zéro aux coefficients à éliminer et un aux coefficients pertinents. La sélection se base soit (a) sur la position du coefficient dans la matrice par exemple TCD, soit (b) sur son amplitude moyenne :

a) les coefficients correspondant aux hautes fréquences spatiales sont souvent les plus affectés par la compression. Un exemples de matrice de pondération suivant le rang du coefficient par exemple TCD est donné dans le tableau ci dessous :

```
0 0 0 0 1 1 1 1
0 0 0 0 1 1 1 1
0 0 0 0 1 1 1 1
0 0 0 0 1 1 1 1
1 1 1 1 1 1 1 1
1 1 1 1 1 1 1 1
1 1 1 1 1 1 1 1
1 1 1 1 1 1 1 1
```

b) certains coefficients de faible amplitude sont ramenés à zéro lors de l'étape de compression.

Afin de choisir ces coefficients, une moyenne pondérée de chacun des coefficients sur la zone d'image analysée (de taille M.N. blocs) est effectuée :

$$moyCoef(i,j) = \sum_{m=1}^{M} \sum_{n=1}^{N} \left| \frac{F_{n,m}(i,j)}{Q(i,j)} \right|$$

,où Q(i,j) est défini comme ci-dessus, en 1)

Les coefficients dont les moyennes sont parmi les 48 plus faibles valeurs sont retenus. Pour ces derniers, k (i,j)=1 et pour les autres k(i,j)=0.

Dans le cas du paramètre "activité spatiale", on fixe k(i,j)=1, et p=2 pour la suite du document relative à la description des figures.

L'activité spatiale globale SA de l'ensemble des blocs peut être alors déterminée par la formule suivante :

$$SA = \overline{bsa_{n,m}} = \frac{1}{H \times W} \sum_{n=0}^{H-1} \sum_{m=0}^{W-1} bsa_{n,m}$$

(HxW) représentant le nombre de blocs de pixels dans la fenêtre d'analyse.

Ladite comparaison (étape c) est avantageusement effectuée à l'aide du paramètre LR défini de la manière suivante :

LR = gj[fi(SA$_1$,SA$_2$)] avec i,j∈{1,2}
avec $f_1(x,y)=x-y$ ou $f_2(x,y)=x/y$
et $g_1$ (x) =100.|x| ou $g_2$ (x) = 100.|log(|x|)|
et par exemple : LR = $\log_{10}$ (SAe/SAs).

Le procédé peut être alors caractérisé en ce qu'il met en oeuvre le calcul du paramètre LR sur une séquence de M images d'entrée et de M images de sorties correspondants, et en ce qu'il met en oeuvre le calcul d'un paramètre d'évaluation ou note de qualité MLR défini de la manière suivante :

$$MLR = Maximum_M \ (LR)$$

Le procédé peut être avantageusement caractérisé en ce qu'il comporte la détermination d'un indicateur d'activité temporelle TA pour un groupe de M images, déterminé de la manière suivante :

$$TA = \sqrt{\sum_{u=1}^{M-1} F_{SA}^2(u)}$$

$F_{SA}(u)$, pour u variant de 0 à M-1, désignant les M coefficients d'une transformée par blocs, par exemple une transformée en cosinus discrète appliquée à M échantillons temporels de l'activité spatiale SA.

Le procédé peut être caractérisé en ce qu'il comporte, en vue de la détermination de l'effet de bloc, les étapes suivantes :

d) déterminer l'activité spatiale SA$_{d1}$ de l'image d'entrée dans une fenêtre d'analyse décalée présentant des blocs de points image ou pixels qui sont décalés d'au moins un pixel dans la direction des lignes de l'image et/ou dans une direction perpendiculaire à la direction des lignes de l'image par rapport auxdits blocs de pixels de ladite fenêtre d'analyse, cette détermination mettant en oeuvre les sous-étapes suivantes

i) appliquer ladite transformée par blocs sur chaque bloc décalé (n,m) dudit ensemble de blocs de pixels de la fenêtre d'analyse décalée pour déterminer les coeeficients transformés F$_d$n,m (i,j),
ii) déterminer à partir des coefficients transformés F$_d$n,m (i,j) des blocs décalés, l'activité spatiale bsa$_d$ de chaque bloc dudit ensemble de blocs décalés,
iii) déterminer l'activité spatiale globale SA$_{d1}$ de l'ensemble des blocs décalés constituant la fenêtre d'analyse décalée,

e) déterminer l'activité spatiale globale SA$_{d2}$ de l'image de sortie dans ladite fenêtre d'analyse décalée en mettant en oeuvre pour l'image de sortie les sous-étapes d i) à d iii)
f) comparer d'une part l'activité spatiale globale SA$_{d2}$ de l'image de sortie dans la fenêtre d'analyse décalée et l'activité spatiale globale $SA_2$ de l'image de sortie dans la fenêtre d'analyse, pour évaluer l'effet de bloc dans l'image de sortie et d'autre part l'activité spatiale $SA_{d1}$ de l'image d'entrée dans la fenêtre d'analyse décalée et l'activité spatiale $SA_1$ de l'image d'entrée dans la fenêtre d'analyse pour évaluer l'effet de bloc dans l'image d'entrée.

L'effet de blocs se caractérise de deux manières différentes :

- intrinsèquement, c'est-à-dire par une fonction représentative du contenu de l'image et de l'image seule.

$$BM_2 = g_j[f_i(SA_{d2}, SA_2)]$$

- de manière différenciée, c'est-à-dire qu'il est nécessaire de comparer deux valeurs d'une fonction représentative du contenu de l'image : la première calculée sur l'image de référence (image d'entrée) et la seconde sur l'image dégradée (image de sortie).

$$BM = g_k \, [f_j(f_i(SA_{d2}, SA_2), f_i(SA_{d1}, SA_1))], \text{avec } i,j,k \in \{1,2\}$$

et on a

$$f_i(x,y)=x-y \text{ ou } f_2(x,y)=x/y$$

$$g_i(x)= 100.|x| \text{ ou } g_2(x)= 100.|\log(|x|)|$$

En particulier, la formule

$$BM_2 = 100. \frac{SA_{d2}(t)}{SA_2(t)}$$

est utilisée.

L'étape f met avantageusement en oeuvre la détermination d'un indicateur BM d'effet de bloc, selon la formule suivante :

$$BM = \frac{SA_{d2} / SA_2}{SA_{d1} / SA_1} \times 100$$

D'autres caractéristiques et avantages de l'invention apparaîtront mieux à la lecture de la description qui va suivre, donnée à titre d'exemple non limitatif, en liaison avec les dessins ci-annexés, dans lesquels :

- la figure 1 est une représentation schématique d'un dispositif pour la mise en oeuvre du procédé selon la présente invention,
- la figure 2 représente une grille alignée pour le calcul du paramètre d'évaluation SA et une grille décalée pour le calcul du paramètre $SA_d$,
- la figure 3 représente l'évolution du paramètre BM au cours d'une séquence filmée particulière,
- et les figures 4a à 4c représentent respectivement l'évolution temporelle du paramètre SA (4a) et la TCD appliquée à M échantillons successifs de SA (4b et 4c) .

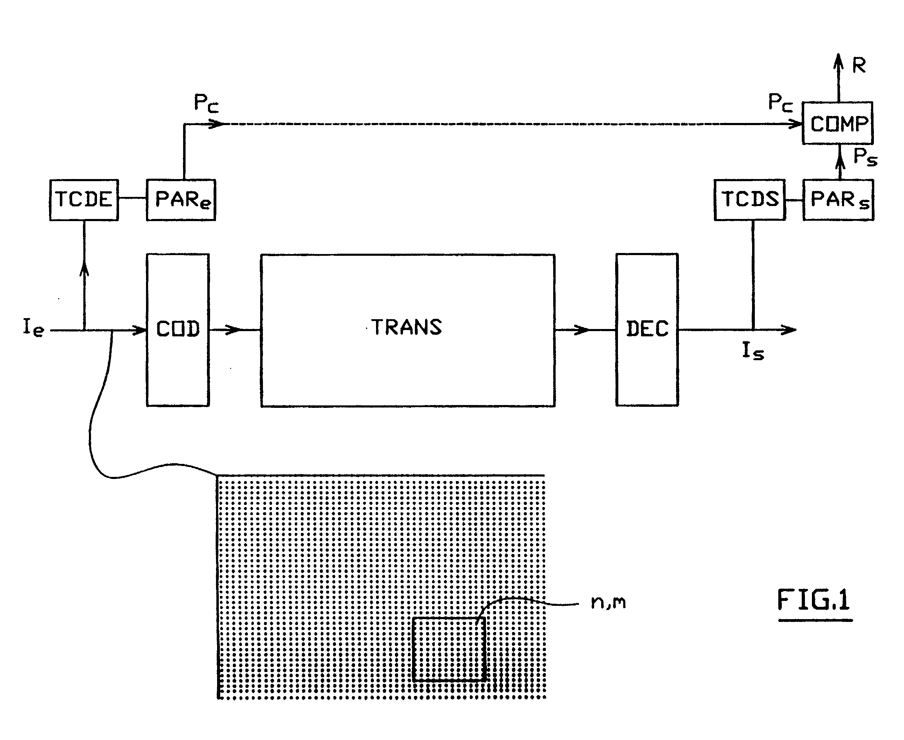

Selon la figure 1, des images d'entrée $I_e$ sont codées par un codeur COD et transmises par un système de transmission TRANS, par exemple un système de transmission par satellite, puis décodées à la réception par un décodeur DEC pour donner une image de sortie décodée $I_s$. Un circuit TCDE applique à titre d'exemple une transformée en cosinus discrète à l'image d'entrée $I_e$ et un circuit PARE détermine les paramètres Pe de l'image d'entrée $I_e$ qui seront utiles à l'évaluation à réaliser. De même, un circuit TCDS applique à titre d'exemple une transformée en cosinus discrète à l'image de sortie $I_s$ et un circuit PARS détermine les paramètres $P_s$ de l'image de sortie $I_s$ qui seront utiles à l'évaluation à réaliser.

Un circuit de comparaison COMP effectue des comparaisons entre les paramètres d'évaluation Pe et Ps et produit en sortie des résultats d'évaluation R. Les paramètres Pe sont transmis vers la sortie par le système TRANS ou indépendamment de celui-ci. Alternativement, il est possible de faire "remonter" les paramètres Ps vers l'entrée afin qu'ils y soient comparés avec les paramètres Pe.

On remarquera également qu'il est possible d'utiliser les coefficients TCD disponibles au niveau du codeur COD et/ou du décodeur DEC, mais alors l'évaluation ne tiendra pas compte des défauts du codeur COD et/ou du décodeur DEC.

La transformée en cosinus discrète bidirectionnelle TCD fait correspondre à un bloc de $N \times N$ pixels (en général $N$ = 8) de l'espace pixel un bloc de $N \times N$ coefficients du domaine transformé. Ces derniers expriment la représentation fréquentielle de l'amplitude de la luminance des pixels.

La transformée TCD présente des coefficients F(u,v) dans lesquels :

- u,v = index de la fréquence spatiale horizontale et verticale,
- x,y = index de position horizontale et verticale du pixel dans le bloc,
- f(x,y) représente la luminance du pixel au point (x,y) dans l'image,
- F(u,v) représente le coefficient tranformé au point (u,v) du domaine transformé,
- avec u,v,x,y variant de 0 à N-1 (N = 8).

Les paramètres exploités pour représenter les dégradations contenues dans les images numériques codées notamment en MPEG2 utilisent cette transformation.

Une information spatiale est fournie à partir du domaine transformé par ' le calcul de l'activité spatiale globale SA de l'image. Ce paramètre informe précisément sur les détails dans le signal image ($I_t$) indexé à l'instant t. ($I_t$) contient (HxW) blocs de pixels. La taille du bloc $f_{nm}(x,y)$ est 8x8 pixels (voir fig.1)

Dans un premier temps la transformée TCD par blocs est appliquée à l'image entièrement, ou partiellement (sur une zone d'intérêt ou fenêtre d'analyse). Le premier facteur représentatif du contenu de l'image, l'activité spatiale, est obtenu à partir de l'image tranformée TCD ($I_t$) . Un bloc image très actif spatialement a une représentation conséquente dans le domaine transformé. Ses coefficients ont une amplitude et une distribution spectrale importantes.

Deux paramètres sont introduits, l'activité spatiale de bloc (bsa) et l'activité spatiale d'image SA($I_t$). Ils représentent respectivement l'activité spatiale intra-bloc et intra-image.

Le contenu analysé est celui de chaque bloc de pixels $f_{nm}(x,y)$ de position à n,m dans l'image ($I_t$).

L'indicateur ($bsa_{n,m}$) pour le bloc n,m tient compte des composantes alternatives du bloc de coefficients transformés $F_{n,m}(u, v)$. On a :

$$bsa_{n,m} = bsa\big(f_{n,m}(x, y)\big) = \left( \sum_{i=0}^{7} \sum_{j=0}^{7} \big(F_{n,m}(i, j)\big)^2 \right) - \big(F_{n,m}(0,0)\big)^2$$

SA($I_t$) est l'expression du contenu global de l'image (ou de la zone d'analyse). Il est calculé par une moyenne des activités spatiales ($bsa_{n,m}$) des blocs concernés.

$$SA(I_t) = \overline{bsa_{n,m}(I_t)} = \frac{1}{H \times W} \sum_{n=0}^{H-1} \sum_{m=0}^{W-1} bsa\big(f_{n,m}(x, y)\big)$$

où (H x W) est le nombre de blocs de pixels de l'image ou de la fenêtre d'analyse.

L'indicateur d'activité spatiale global SA($I_t$) permet de qualifier la richesse de l'image. Ce paramètre est affecté par le codage à réduction de débit et par les erreurs de transmission. La comparaison du même paramètre calculé à l'entrée et à la sortie d'un système vidéo numérique contribue à l'identification des dégradations générées par ce système. Ce paramètre est représentatif des dégradations générées par le système, mais sans l'inconvénient d'une compensation entre les défauts. En effet, d'une part le calcul réalisé par blocs élimine les effets de bloc et d'autre part les pertes d'information et les faux contours se traduisent dans la tranformée par des effets de perte des hautes fréquences, et ces deux phénomènes agissent donc dans le même sens.

L'évolution temporelle de $SA(I_t)$ représente les événements apparus dans la séquence vidéo. Par ailleurs, ce paramètre est affecté par le codage à réduction de débit et par les erreurs de transmission. La comparaison du même paramètre calculé à l'entrée et à la sortie d'un système vidéo numérique est effectuée sur une image $I_t$ indexée à l'instant t. Elle contribue à l'identification des dégradations générées par ce système. La formulation mathématique utilisée pour la comparaison est :

$$\log\_ratio(I_t) = \log_{10}\left[\frac{SA(I_t)_e}{SA(I_t)_s}\right]$$

Le paramètre définitif pour la mesure de la dégradation liée à la perte d'informations est le paramètre MLR :

$$MLR_M = Maximum_M[\log\_ratio(I_t)]$$

Cet indicateur est calculé sur une séquence de M images. Cette option permet d'avoir une information réduite concernant une période de temps. Elle permet d'avoir une note de qualité sur : $T = M \times 1/25$ seconde, ou plus généralement $T = M/NI$, NI désignant le nombre d'images par seconde.

La procédure de calcul de la perte d'information se présente par exemple comme suit :

a) sélection d'une image à l'entrée du système,
b) calcul de $SA(I_t)_e$ pour cette image,
c) indexation de cette image avec sa date et son paramètre associé $SA_e$,
d) transmission de paramètres de référence vers la sortie du système,
f) calcul de $SA(I_t)_s$ pour cette image,
g) calcul du $\log\_ratio(I_t)$ pour chaque image $I_t$,
h) calcul de la note de qualité MLR pour chaque séquence de M images.

On notera que le procédé pourrait également être mis en oeuvre en faisant "remonter" vers l'entrée les valeurs de SA calculées pour chaque image de sortie.

Un avantage du procédé est que chaque image à l'entrée et à la sortie est caractérisé par la valeur du paramètre SA, ce qui signifie qu'il n'est besoin de transmettre en tant que paramètre Pe qu'une seule donnée par image pour caractériser les dégradations (autres que l'effet de bloc) par opposition à des procédés de l'art antérieur qui nécessitent de transmettre un grand nombre de données permettant d'effectuer une comparaison par différence pixel à pixel entre les images référence et dégradée.

La comparaison effectuée à partir du facteur MLR traduit une mesure de la qualité des images finales et par conséquent informe sur les performances du système de codage mis en oeuvre lors de la transmission.

Afin de valider la pertinence du facteur MLR, nous avons confronté les résultats obtenus aux notes obtenues par des panels de personnes représentatives lors de tests subjectifs. Le fort coefficient de corrélation obtenu entre l'évaluation objective et subjective nous démontre l'efficacité d'un tel paramètre.

Dans les séquences vidéo codées à faible débit, la distorsion par effet de bloc se manifeste par des discontinuités du contenu de l'image aux limites des blocs adjacents. Cet artefact est visible sur les zones de faible ou de grande activité spatiale et aussi sur les zones de forte ou de faible luminosité. Il est dû à un codage inter-blocs indépendant et à une quantification grossière du contenu de chaque bloc. Le coefficient continu $F(0,0)$ de la transformée TCD représente la moyenne des valeurs de luminance d'un bloc. Le codage des coefficients continus de deux blocs, adjacents spatialement, à des valeurs sensiblement différentes est une des causes de cette dégradation. Les autres coefficients transformés, qui représentent les composantes alternatives, traduisent les différentes évolutions contenues dans le bloc. Le codage et la quantification grossière de ces coefficients génère également l'effet de bloc dans les zones des contours. Des erreurs dans le flux numérique influent sur la compensation de mouvement. Ceci se traduit par un effet au niveau des blocs ou des macro-blocs.

Selon l'invention, un paramètre de mesure de l'effet de bloc met en oeuvre une comparaison de deux paramètres calculés de chaque côté du système vidéo.

L'indicateur proposé permet d'évaluer l'importance de l'information visuelle erronée apportée par la grille structurée de blocs 8x8 visible dans les images en sortie de chaîne.

Les bordures des blocs 8x8 ou les discontinuités de contours sont considérées comme une information perceptible et additionnelle dans l'image. Sachant que le codage est réalisé de manière indépendante pour les blocs adjacents, les pertes d'information internes aux blocs génèrent des discontinuités de contenu, voire même l'apparition de nouveaux contours sur les frontières.

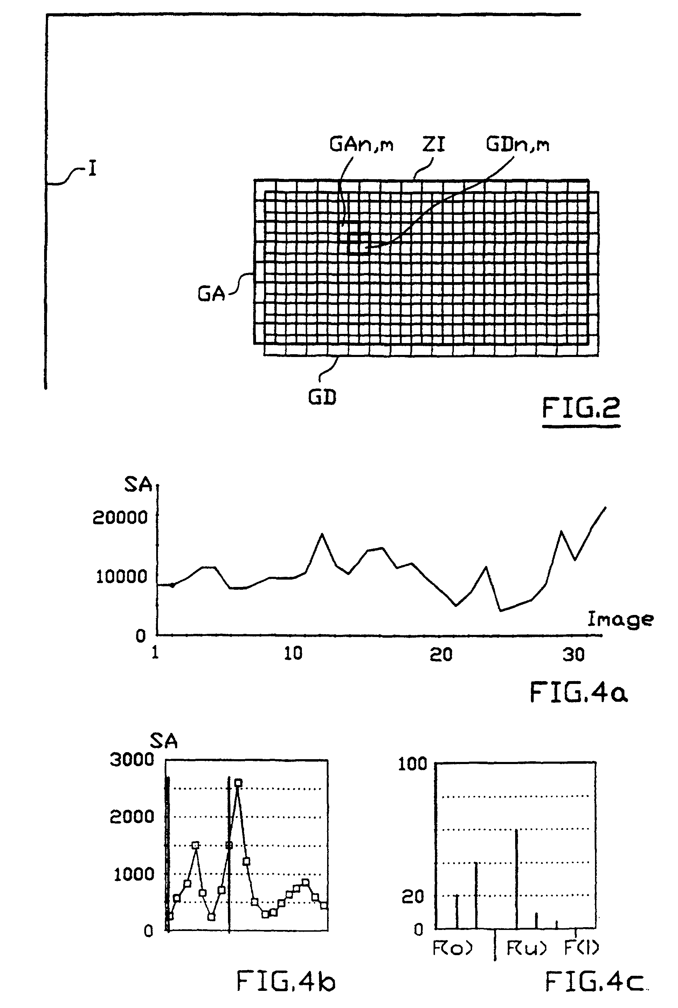

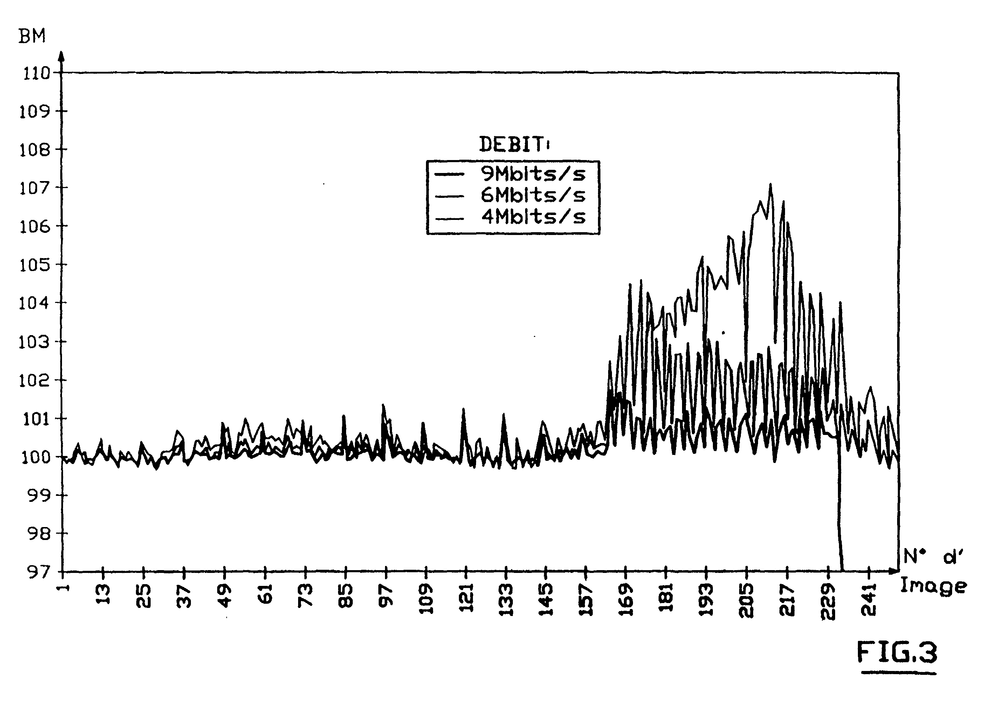

Un procédé adapté à cette dégradation selon l'invention repose sur le calcul de deux paramètres : l'activité spatiale globale SA (voir supra) et l'activité spatiale globale décalée $SA_d$ (voir fig.2).

Le paramètre SA reste non affecté par les effets de bloc, puisqu'il est réalisé à partir de ces mêmes blocs et de manière alignée sur leur grille. Afin de souligner la contribution des contours et des défauts autour des blocs, on détermine l'activité spatiale décalée $SA_d$. Elle permet de mettre en exergue les artefacts aux frontières. A partir de la même définition de SA, $SA_d$ est calculée avec de préférence un décalage de $N/_2 = 4$ pixels horizontalement et de $N/_2 = 4$ pixels verticalement. On remarquera que l'activité spatiale décalée $SA_d$ peut être calculée en effectuant un décalage de 1 à N-1 pixels (et de préférence $N/_2$ pixels) seulement dans la direction horizontale, ou seulement dans la direction verticale, de manière à évaluer l'effet de bloc horizontal ou bien l'effet de bloc vertical.

Les deux paramètres sont issus d'une somme sur la zone d'intérêt ou sur l'image entière. Une comparaison entre les deux indicateurs met en valeur l'apport de l'information des contours au bord des blocs. Un nouveau paramètre, est donc introduit, $Sa_{ratio}$ dans l'équation suivante.

$$SA_{ratio}(t) = 100.\frac{SA_d\,(t)}{SA(t)}$$

$SA_{ratio}$ n'est pas seulement sensible aux contours ou discontinuités aux bords des blocs mais il l'est également au contenu d'origine des blocs. Il est par conséquent nécessaire, pour mesurer spécifiquement la dégradation introduite par un système vidéo, d'en extraire l'information apportée par le contenu original de l'image.

L'indicateur définitif pour la mesure et la détection de l'effet de bloc introduit par un système vidéo est calculé à partir des valeurs $SA_{ratio}$ obtenues à l'entrée et à la sortie du-dit système.

Ces valeurs sont considérées respectivement comme valeur du signal référence à l'entrée ($SAratio_e$) et valeur du signal dégradé à la sortie ($SAratio_s$). L'indicateur de l'effet de bloc BM est défini par l'équation suivante.

$$BM_{SA} = 100.\frac{SAratio_e}{SAratio_s}$$

Le procédé de détection de l'effet de bloc peut être mis en oeuvre par exemple comme suit :

a) sélection d'une image à l'entrée du système,
b) calcul de $SA(I_t)_e$, $SA_d(I_t)_e$ et $SA_{ratio}(I_t)_e$ pour cette image,
c) indexation de cette image avec sa date et son paramètre associé,
d) transmission de données de référence vers la sortie du système,
e) identification de la même image indexée à la sortie du système,
f) calcul de $SA(I_t)_s$, $SA_d(I_t)_s$ et $SA_{ratio}(I_t)_s$ pour la même image à la sortie du système,
g) calcul du $BM_{SA}$ pour chaque image $I_t$,
h) calcul de la moyenne de $BM_{SA}$ pour chaque séquence de M' images (avec par exemple M' = M). Cette note qualifie la séquence pour la dégradation en question.

La figure 3 démontre l'importance décroissante de $BM_{SA}$ pour 4, 6 et respectivement 9Mbits/s. Cette remarque est valable spécialement dans la dernière partie de la séquence vidéo. En effet, pendant cette période le contenu spatial et temporel de la séquence choisie évolue brutalement. Ceci provoque une baisse de la qualité des images finales due à une réduction de débit. Le codage par quantification des coefficients TCD provoque l'apparition de l'effet de bloc, et ce d'autant plus que le codage est grossier.

Les dégradations dans les séquences d'images numériques codées ont des formes spatiales ou temporelles. En effet, des erreurs de codage ou de transmission peuvent affecter le contenu spatial : contours, objets et structures contenus dans le signal. Cependant, elles peuvent également entacher l'évolution temporelle de la séquence vidéo : saccades, gel d'images ou déplacements erronés d'objets.

Afin d'identifier les dégradations temporelles qui altèrent les séquences vidéo, nous avons défini un paramètre supplémentaire appelé "Activité Temporelle" TA. Il traduit les évolutions du contenu des séquences d'image dans le temps. Il est sensible aux différents événements qui peuvent survenir et affecter le signal.

L'indicateur spatial $SA(I_t)$ traduit le contenu de l'image courante dans la séquence à un instant t. Les variations temporelles de $SA(I_t)$ représentent les évolutions temporelles du contenu de l'image et donc elles traduisent les changements survenus (voir fig.4a). Le signal mono-dimensionnel SA($I_t$) d'activité spatiale globale de l'image est proportionnel à la richesse du contenu. Dans le cas mono-dimensionnel, la TCD est une transformation qui fait correspondre à un ensemble de M points f(x) une série de M fréquences. Elle se définit par :

$$F(u) = \sqrt{\frac{2}{N}} c(u) \sum_{x=0}^{N-1} f(x) \cos\left(\left(\frac{2x+1}{2N}\right)\pi u\right)$$

$$c(u) = 1/\sqrt{2} \quad \text{si } u = 0$$
$$c(u) = 1 \quad \quad \text{si } u \neq 0$$

$$F(0) = \sqrt{\frac{2}{N}} c(0) \sum_{x=0}^{N-1} f(x)$$

Sur toute fenêtre de M échantillons temporels du signal SA($I_t$) est appliquée une transformée en cosinus discrète TCD. Cette nouvelle représentation traduit les fréquences temporelles du signal et par conséquent l'activité de la séquence d'image. La première raie F(0) est la composante continue, les autres raies F(u) avec u≠o sont les composantes alternatives.

La composante continue du spectre renseigne sur la valeur moyenne de la richesse du contenu sur M images. Les fréquences alternatives informent sur les variations temporelles du contenu. Seule l'amplitude des raies est prise en considération.

$$\text{TCD}_T = \text{TCD}\left(SA(I_t)\right) = \left\{F_0(u) \quad \quad u = 0.. \; M-1\right\}$$

Le spectre TCD$_T$ (voir fig.4c) du signal SA (voir fig.4b) informe sur les évolutions temporelles de la séquence vidéo et par conséquent traduit toute dégradation modifiant ces évolutions. F(0) par définition représente la moyenne du signal SA($I_t$) pendant les M images de sortie considérées dans la séquence. Les amplitudes des composantes alternatives $F(u)_{u \neq o}$ traduisent la manière avec laquelle change le contenu de la vidéo : variations rapides (clips vidéo), modifications lentes ("travelling"), plans fixes, etc... Afin d'exploiter les propriétés de l'analyse dans le domaine transformé, un paramètre TA a été défini. Il est calculé pour un groupe de M images.

$$TA = \sqrt{\sum_{u=1}^{M-1} F_{SA}^2(u)}$$

TA indique l'amplitude des fluctuations de l'activité SA dans la séquence. Il traduit tout événement temporel de la séquence et par conséquent : les coupures et les gels d'images. TA est comparé à un seuil donné $S_1$ établi empiriquement, en dessous duquel on considère qu'on se trouve en présence d'une coupure ou d'un gel d'images.

Le procédé de détection des coupures et des gels d'image peut être mis en oeuvre par exemple comme suit :

a) sélection d'un groupe d'images,
b) calcul de SA ($I_t$) pour chaque image,
c) calcul de la TCD$_T$ et de TA,
d) - si TA<$s_1$ et si F(0)<$s_2$, alors le groupe d'images est une succession de la même image uniforme (en pratique coupure noire).

- si TA<$S_1$ et si F(0)>$S_2$, alors le groupe d'images est une succession de la dernière image non erronée gelée par le décodeur.

- si TA>$s_1$, retour à a.

Le phénomène de gel d'images est une dégradation caractéristique qui apparaît lors d'erreurs sur la chaîne complète de distribution du signal de télévision. Le paramètre d'activité temporelle TA est applicable dans ce cas de figure. En effet, il détecte cet événement qui est lié à la stratégie du décodeur. Le gel d'images prend deux formes :

1. restitution des dernières données images non corrompues,
2. visualisation d'une image uniforme (souvent noire), et ceci tant que les données reçues sont inexploitables.

La famille de codage MPEG introduit la notion de groupe d'images ("Group of Pictures GOP"). Cette structure de la séquence est liée à une syntaxe définissant les algorithmes prédictifs à réduction de débit qui sont appliqués à chaque image (images codées sans prédiction : Intra I, images prédictives unidirectionnelles P, images prédictives Bidirectionelles B). La particularité de chaque image influe sur l'aspect de l'impact des différentes erreurs qui l'affectent.
L'indicateur défini ici traduit les événements temporels qui surviennent durant la séquence vidéo. Il permet par conséquent d'identifier et de comptabiliser les ruptures temporelles des séquences. Par la même occasion il représente un paramètre de qualification de la qualité du service.
L'invention ne se limite pas aux modes de réalisation décrits. En particulier, l'effet de bloc pourrait être évalué de manière intrinsèque sur l'image de sortie. Le procédé est alors caractérisé en ce qu'il comporte les étapes suivantes :

$d_1$) déterminer l'activité spatiale globale $SA_{d2}$ de l'image de sortie dans une fenêtre d'analyse décalée présentant des blocs de points image ou pixels qui sont décalés d'au moins un pixel dans la direction des lignes de l'image et/ou dans une direction perpendiculaire à la direction des lignes de l'image par rapport auxdits blocs de pixels de ladite fenêtre d'analyse, cette détermination mettant en oeuvre les sous-étapes suivantes:

i) appliquer ladite transformée par blocs sur chaque bloc décalé (n,m) dudit ensemble de blocs de pixels de la fenêtre d'analyse décalée pour déterminer les coefficients transformés $F_d$n,m (i,j),
ii) déterminer à partir des coefficients transformés $F_d$n,m (i,j) des blocs décalés, l'activité spatiale $bsa_d$ de chaque bloc dudit ensemble de blocs décalés,
iii) déterminer l'activité spatiale globale $SA_{d2}$ de l'ensemble des blocs décalés constituant la fenêtre d'analyse décalée,

$e_1$) comparer l'activité spatiale globale $SA_{d2}$ de l'image de sortie dans la fenêtre d'analyse décalée et l'activité spatiale globale $SA_2$ de l'image de sortie dans la fenêtre d'analyse.

L'invention peut être mise en oeuvre à l'aide de tranformées par blocs linéaires et orthogonales telles que la tranformée en cosinus discrète TCD, la transformée en sinus discrète, la transformée de Fourier, la tranformée de Haar, la transformée d'Hadamar, la transformée de Slant ou bien encore une transformée en ondelettes (DWT) dont les coefficients ont été réorganisés pour obtenir les blocs transformés.

## Revendications

**1.** Procédé d'évaluation de la dégradation d'une image vidéo codée par blocs de points images ou pixels, cette dégradation étant générée par un système de codage et/ou de stockage et/ou de transmission, produisant une image de sortie à partir d'une image d'entrée, qui comporte les étapes de :

a) sélectionner une image d'entrée et déterminer une activité spatiale (SA) de l'image d'entrée dans une fenêtre d'analyse représentant au moins une partie de l'image qui présente un ensemble de dits blocs de points images ou pixels, cette détermination mettant en oeuvre les sous-étapes suivantes :

i) déterminer pour chaque bloc (n,m) du dit ensemble de blocs de pixels, des coefficients transformés Fn,m (i, y) obtenus par une transformée par blocs des dits blocs,
**caractérisé en ce qu'**il comporte les étapes suivantes :
ii) déterminer par une combinaison des coefficients transformés Fn,m (i,y), un paramètre (bsa) représentant l'activité spatiale de chaque bloc dudit ensemble de blocs de pixels
iii) déterminer à partir dudit paramètre (bsa) représentant l'activité spatiale de chaque bloc un paramètre global ($SA_1$) représentant l'activité spatiale globale de l'ensemble des blocs de pixels constituant la fenêtre d'analyse, pour qualifier la richesse de l'image d'entrée

b) sélectionner l'image de sortie correspondant à l'image d'entrée et déterminer un dit paramètre global ($SA_2$) représentant l'activité spatiale globale de l'image de sortie dans ladite fenêtre d'analyse pour qualifier la richesse de l'image de sortie, en mettant en oeuvre pour l'image de sortie les sous-étapes a i) à a iii)

c) comparer lesdits paramètres représentant l'activité spatiale globale ($SA_2$) de l'image de sortie dans la fenêtre d'analyse et l'activité spatiale globale ($SA_1$) de l'image d'entrée dans la fenêtre d'analyse, pour en déduire une évaluation de la dégradation.

**2.** Procédé selon la revendication 1 **caractérisé en ce que** le paramètre représentant l'activité spatiale (bsa) d'un bloc (n,m) est déterminé par la formule suivante :

$$bsa_{n.m} = \left( \sum_{i=0}^{7} \sum_{j=0}^{7} (k(i,j).F_{n.m}(i,j))^p \right) - (k(0,0).F_{n.m}(0,0))^p$$

où k(i,j) est un coefficient constant de pondération pour la composante i,j utilisée et p une constante.

**3.** Procédé selon la revendication 2 **caractérisé en ce que** le paramètre global représentant l'activité spatiale globale (SA) de l'ensemble des blocs est déterminé par la formule suivante :

$$SA = \overline{bsa_{n.m}} = \frac{1}{H \, x \, W} \sum_{n=0}^{H-1} \sum_{m=0}^{W-1} bsa_{n.m}$$

(HxW) représentant le nombre de blocs de pixels dans la fenêtre d'analyse.

**4.** Procédé selon la revendication 3 **caractérisé en ce que** ladite comparaison (étape c) est effectuée à l'aide d'un paramètre LR défini de la manière suivante :

$$LR = gj \, [fi \, (SA_1/SA_2)] \text{ avec } i,j \in (1,2)$$

avec

$$fi(x,y) = x-y \text{ ou } f2 (x,y) = x/y$$

et

$$g1 (x) = 100 \, |x| \text{ ou } g2 (x) = 100 \, |log \, (|xj)|$$

**5.** Procédé selon la revendication 4 **caractérisé en ce qu'**il met en oeuvre le calcul du paramètre LR sur une séquence de M images d'entrée et de M images de sorties correspondantes, et **en ce qu'**il met en oeuvre le calcul d'un paramètre d'évaluation ou note de qualité MLR défini de la manière suivante :

$$MLR = Maximum_M \, (LR)$$

**6.** Procédé selon une des revendications précédentes **caractérisé en ce qu'**il comporte la détermination d'un indicateur d'activité temporelle TA pour un groupe de M images, déterminé de la manière suivante :

$$TA = \sqrt{\sum_{u=0}^{M-1} F^2_{SA}(u)}$$

$F_{SA}(u)$, pour u variant de 0 à M-1, désignant les M coefficients d'une transformée par blocs appliquée à M échantillons temporels du paramètre global représentant l'activité spatiale globale (SA).

**7.** Procédé selon la revendication 6 **caractérisé en ce qu'**il comporte une étape de comparaison de l'indicateur d'activité temporelle TA à un seuil donné $S_1$, de manière à déterminer la présence d'une coupure ou d'un gel d'image.

**8.** Procédé selon une des revendications précédentes **caractérisé en ce qu'**il comporte, en vue de la détermination de manière intrinsèque de l'effet de bloc, les étapes suivantes :

d1 ) déterminer un paramètre global représentant l'activité spatiale globale ($Sa_{d2}$) de l'image de sortie dans une fenêtre d'analyse décalée présentant des blocs de points image ou pixels qui sont décalés d'au moins un pixel dans la direction des lignes de l'image et/ou dans une direction perpendiculaire à la direction des lignes de l'image par rapport auxdits blocs de pixels de ladite fenêtre d'analyse, cette détermination mettant en oeuvre les sous-étapes suivantes

i) appliquer ladite transformée par blocs sur chaque bloc décalé (n,m) dudit ensemble de blocs de pixels de la fenêtre d'analyse décalée pour déterminer les coefficients transformés $F_d n,m$ (i,j),
ii) déterminer par une combinaison des coefficients transformés $F_d n,m$ (i,j) des blocs décalés, un paramètre ($bsa_d$) représentant l'activité spatiale de chaque bloc dudit ensemble de blocs décalés,
iii) déterminer à partir dudit paramètre ($bsa_d$) représentant l'activité spatiale de chaque bloc dudit ensemble de blocs décalés, un paramètre global représentant l'activité spatiale globale ($Sa_{d2}$) de l'ensemble des blocs décalés constituant la fenêtre d'analyse décalée,

e1) comparer lesdits paramètres représentant l'activité spatiale globale ($SA_{d2}$) de l'image de sortie dans la fenêtre d'analyse décalée et l'activité spatiale globale ($SA_2$) de l'image de sortie dans la fenêtre d'analyse.

**9.** Procédé selon une des revendications précédentes **caractérisé en ce qu'**il comporte, en vue de la détermination de l'effet de bloc, les étapes suivantes
d2) déterminer un paramètre d'activité spatiale globale ($Sa_{d1}$) de l'image d'entrée dans une fenêtre d'analyse décalée présentant des blocs de points image ou pixels qui sont décalés d'au moins un pixel dans la direction des lignes de l'image et/ou dans une direction perpendiculaire à la direction des lignes de l'image par rapport auxdits blocs de pixels de ladite fenêtre d'analyse, cette détermination mettant en oeuvre les sous-étapes suivantes

i) appliquer une transformée par blocs sur chaque bloc décalé (n,m) dudit ensemble de blocs de pixels de la fenêtre d'analyse décalée pour déterminer les coefficients transformés $F_d n,m$ (i,y),
ii) déterminer par une combinaison des coefficients transformés $F_d n,m$ (i,y) des blocs décalés, un paramètre ($bsa_d$) représentant l'activité spatiale de chaque bloc dudit ensemble de blocs décalés,
iii) déterminer à partir dudit paramètre ($bsa_d$) représentant l'activité spatiale de chaque bloc dudit ensemble de blocs décalés, un paramètre représentant l'activité spatiale globale ($Sa_{d1}$) de l'ensemble des blocs décalés constituant la fenêtre d'analyse décalée,

e) déterminer le paramètre d'activité spatiale ($SA_{d2}$) de l'image de sortie dans ladite fenêtre d'analyse décalée en mettant en oeuvre les sous-étapes $\underline{d_2}$ i) à $\underline{d}$ iii)
f) comparer d'une part les paramètres représentant l'activité spatiale ($SA_{d2}$) de l'image de sortie dans la fenêtre d'analyse décalée et l'activité spatiale ($SA_2$) de l'image de sortie dans la fenêtre d'analyse, pour évaluer l'effet de bloc dans l'image de sortie et d'autre part les paramètres représentant l'activité spatiale ($SA_{d1}$) de l'image d'entrée dans la fenêtre d'analyse décalée et l'activité spatiale ($SA_1$) de l'image d'entrée dans la fenêtre d'analyse pour évaluer l'effet de bloc dans l'image d'entrée.

**10.** Procédé selon la revendication 9 **caractérisé en ce que** l'étape f met en oeuvre la détermination d'un indicateur BM d'effet de bloc, selon la formule suivante :

$$BM = \frac{SA_{d2} \; / \; SA_2}{SA_{d1} \; / \; SA_1} \; x100$$

**11.** Procédé selon une des revendications précédentes **caractérisé en ce que** ladite transformée par blocs est une transformée linéaire et orthogonale, notamment une transformée en cosinus discrète TCD ou une transformée en sinus discrète ou une transformée de Fourier ou de Haar ou de Hadamar ou de Slant.

**12.** Procédé selon une des revendications 1 à 10 **caractérisé en ce que** ladite transformée par blocs est une transformée en ondelettes (DWT) dont les coefficients ont été réorganisés pour obtenir des blocs transformés.

**Patentansprüche**

**1.** Verfahren der Bewertung der Verschlechterung eines kodierten Videobilds durch Blöcke bzw. mittels Blöcken von Bildpunkten oder Pixeln, wobei diese Verschlechterung durch ein System der Kodierung und/oder der Speicherung und/oder der Übertragung erzeugt wird, das, ausgehend von einem Bild des Eingangs, ein Bild des Ausgangs erzeugt, welches die folgenden Schritte enthält:

a) Auswählen eines Bilds des Eingangs und Bestimmen einer räumlichen Aktivität (SA) des Bilds des Eingangs in einem Fenster der Analyse, welches wenigstens einen Teil des Bilds repräsentiert, das eine Gesamtheit der genannten Blöcke von Bildpunkten oder Pixeln aufweist, wobei diese Bestimmung die folgenden Unterschritte benutzt:

i) Bestimmen, für jeden Block (n, m) der genannten Gesamtheit von Blöcken von Pixeln, transformierte Koeffizienten Fn, m (i, y),die durch eine Transformation durch Blöcke bzw. mittels Blöcken der genannten Blöcke erhalten werden,
**dadurch gekennzeichnet, dass** es die folgenden Schritte enthält:

ii) Bestimmen, durch eine Kombination der transformierten Koeffizienten Fn, m (i, y), einen Parameter (bsa), der die räumliche Aktivität von jedem Block der genannten Gesamtheit von Blöcken von Pixeln repräsentiert,

iii) Bestimmen, ausgehend von dem genannten Parameter (bsa), der die räumliche Aktivität von jedem Block repräsentiert, einen globalen Parameter ($SA_1$), welcher die globale räumliche Aktivität der Gesamtheit der Blöcke von Pixeln, welche das Fenster der Analyse bilden, repräsentiert, um den Gehalt bzw. die Reichhaltigkeit des Bilds des Eingangs zu qualifizieren,

b) Auswählen des Bilds des Ausgangs, das dem Bild des Eingangs entspricht, und Bestimmen eines genannten globalen Parameters ($SA_2$), der die globale räumliche Aktivität des Bilds des Ausgangs in dem genannten Fenster der Analyse repräsentiert, um den Gehalt bzw. die Reichhaltigkeit des Bilds des Ausgangs zu qualifizieren, indem man für das Bild des Ausgangs die Unterschritte a i) bis a iii) benutzt,

c) Vergleichen der genannten Parameter, welche die globale räumliche Aktivität ($SA_2$) des Bilds des Ausgangs in dem Fenster der Analyse und die globale räumliche Aktivität ($SA_1$) des Bilds des Eingangs in dem Fenster der Analyse repräsentieren, um daraus eine Bewertung der Verschlechterung abzuleiten.

**2.** Verfahren gemäß Anspruch 1, **dadurch gekennzeichnet, dass** der Parameter, welcher die räumliche Aktivität (bsa) eines Blocks (n, m) repräsentiert, durch die folgende Formel bestimmt wird:

$$bsa_{n,m} = \left( \sum_{i=0}^{7} \sum_{j=0}^{7} (k(i,j).F_{n,m}(i,j))^p \right) - (k(0,0).F_{n,m}(0,0))^p$$

worin k(i/j) ein konstanter Koeffizient der Gewichtung für die benutzte Komponente i,j und p eine Konstante ist.

**3.** Verfahren gemäß Anspruch 2, **dadurch gekennzeichnet, dass** der globale Parameter (SA), der die globale räumliche Aktivität der Gesamtheit der Blöcke repräsentiert, bestimmt wird durch die folgende Formel:

$$SA = \overline{bsa_{n,m}} = \frac{1}{H \times W} \sum_{n=0}^{H-1} \sum_{m=0}^{W-1} bsa_{n,m}$$

wobei (HxW) die Anzahl der Blöcke von Pixeln in dem Fenster der Analyse repräsentiert.

**4.** Verfahren gemäß Anspruch 3, **dadurch gekennzeichnet, dass** der genannte Vergleich (Schritt c) mithilfe eines Parameters LR bewirkt wird, der in der folgenden Art und Weise definiert ist:

$$LR = gj[fi(SA_1/SA_2)] \text{ mit } i,j \in (1, 2)$$

mit

$$fi(x,y) = x-y \text{ oder } f2(x,y) = x/y$$

und

$$g1(x) = 100 |x| \text{ oder } g2(x) = 100 |log(|x|)|$$

**5.** Verfahren gemäß Anspruch 4, **dadurch gekennzeichnet , dass** es die Berechnung des Parameters LR über eine Sequenz von M Bildern des Eingangs und von M entsprechenden Bildern des Ausgangs benutzt, und dass es die Berechnung eines Parameters der Bewertung oder eines Prädikats der Qualität MLR verwendet, der bzw. das in der folgenden Art und Weise definiert ist:

$$MLR = Maximum_M(LR)$$

**6.** Verfahren gemäß einem der vorhergehenden Ansprüche, **dadurch gekennzeichnet, dass** es die Bestimmung eines Indikators TA der zeitlichen Aktivität für eine Gruppe von M Bildern enthält, der in der folgenden Art und Weise bestimmt wird:

$$TA = \sqrt{\sum_{u=0}^{M-1} F_{SA}^{2}(u)}$$

wobei $F_{SA}(u)$, wofür u von 0 bis M-1 variiert, die M Koeffizienten einer Transformation durch Blöcke bzw. mittels Blöcken bezeichnet, die auf M zeitliche Proben bzw. Abtastwerte des globalen Parameters (SA), welcher die globale räumliche Aktivität repräsentiert, angewandt wird.

7. Verfahren gemäß Anspruch 6, **dadurch gekennzeichnet, dass** es einen Schritt des Vergleichs des Indikators TA der zeitlichen. Aktivität mit einem einzigen Datenwert $S_1$ in der Art und Weise, dass das Vorhandensein einer Unterbrechung oder eines Einfrierens des Bilds bestimmt wird, enthält.

8. Verfahren gemäß einem der vorhergehenden Ansprüche, **dadurch gekennzeichnet, dass** es im Hinblick auf die Bestimmung der intrinsischen bzw. innewohnenden Art und Weise der Wirkung des Blocks die folgenden Schritte enthält:

   d1) Bestimmen eines globalen Parameters ($Sa_{d2}$), welcher die globale räumliche Aktivität des Bilds des Ausgangs in einem versetzten Fenster der Analyse repräsentiert, welches Blöcke von Bildpunkten oder Pixeln aufweist, die wenigstens um ein Pixel in der Richtung der Zeilen des Bilds und/oder in einer Richtung, die senkrecht zu der Richtung der Zeilen des Bilds ist, mit Bezug auf die genannten Blöcke von Pixeln des genannten Fensters der Analyse versetzt sind, wobei diese Bestimmung die folgenden Unterschritte benutzt:

   i) Anwenden der genannten Transformation durch Blöcke bzw. mittels Blöcken auf jeden versetzten Block (n,m) der genannten Gesamtheit von Blöcken von Pixeln des versetzten Fensters der Analyse, um die transformierten Koeffizienten $F_d$n,m (i/j) zu bestimmen,

   ii) Bestimmen, durch eine Kombination der transformierten Koeffizienten $F_d$n,m (i,j) der versetzten Blöcke, eines Parameters ($bsa_d$), welcher die räumliche Aktivität von jedem Block der genannten Gesamtheit von versetzten Blöcken repräsentiert,

   iii) Bestimmen, ausgehend von dem genannten Parameter ($bsa_d$), welcher die räumliche Aktivität von jedem Block der genannten Gesamtheit von versetzten Blöcken repräsentiert, eines globalen Parameters ($Sa_{d2}$), der die globale räumliche Aktivität der Gesamtheit der versetzten Blöcke repräsentiert, welche das versetzte Fenster der Analyse bilden,

   e1 Vergleichen der genannten Parameter, welche die globale räumliche Aktivität ($Sa_{d2}$) des Bilds des Ausgangs in dem versetzten Fenster der Analyse und die globale räumliche Aktivität ($SA_2$) des Bilds des Ausgangs in dem Fenster der Analyse repräsentieren.

9. Verfahren gemäß einem der vorhergehenden Ansprüche, **dadurch gekennzeichnet, dass** es im Hinblick auf die Bestimmung der Wirkung des Blocks die folgenden Schritte enthält:

   d2) Bestimmen eines Parameters ($Sa_{d1}$) der globalen räumlichen Aktivität des Bilds des Eingangs in einem versetzten Fenster der Analyse, welches Blöcke von Bildpunkten oder Pixeln aufweist, die wenigstens um ein Pixel in der Richtung der Zeilen des Bilds und/oder in einer Richtung, welche senkrecht zu der Richtung der Zeilen des Bilds ist, mit Bezug auf die genannten Blöcke von Pixeln des genannten Fensters der Analyse versetzt sind, wobei diese Bestimmung die folgenden Unterschritte benutzt:

   i) Anwenden einer Transformation durch Blöcke bzw. mittels Blöcken auf jeden versetzten Block (n,m) der genannten Gesamtheit von Blöcken von Pixeln des versetzten Fensters der Analyse, um die transformierten Koeffizienten $F_d$n,m (i,y) zu bestimmen,

   ii) Bestimmen, durch eine Kombination der transformierten Koeffizienten $F_d$n,m (i,y) der versetzten Blöcke, eines Parameters ($bsa_d$), der die räumliche Aktivität von jedem Block der genannten Gesamtheit von versetzten Blöcken repräsentiert,

   iii) Bestimmen, ausgehend von dem genannten Parameter ($bsa_d$), welcher die räumliche Aktivität von jedem Block der genannten Gesamtheit von versetzten Blöcken repräsentiert, eines Parameters ($Sa_{d1}$), welcher die globale räumliche Aktivität der Gesamtheit der versetzten Blöcke, die das versetzte Fenster der Analyse bilden, repräsentiert,

   e) Bestimmen des Parameters ($SA_{d2}$) der räumlichen Aktivität des Bilds des Ausgangs in dem genannten versetzten Fenster der Analyse, indem man die Unterschritte $d_2$ i) bis d iii) benutzt,

f) Vergleichen von einerseits den Parametern ($SA_{d2}$), welche die räumliche Aktivität des Bilds des Ausgangs in dem versetzten Fenster der Analyse repräsentieren, und der räumlichen Aktivität ($SA_2$) des Bilds des Ausgangs in dem Fenster der Analyse, um den Effekt des Blocks in dem Bild des Ausgangs zu bewerten, und andererseits der Parameter ($SA_{d1}$), die die räumliche Aktivität des Bilds des Eingangs in dem versetzten Fenster der Analyse und die räumliche Aktivität ($SA_1$) des Bilds des Eingangs in dem Fenster der Analyse repräsentieren, um den Effekt des Blocks in dem Bild des Eingangs zu bewerten.

10. Verfahren gemäß dem Anspruch 9, **dadurch gekennzeichnet, dass** der Schritt f die Bestimmung eines Indikators BM des Effekts des Blocks gemäß der folgenden Formel benutzt:

$$BM = \frac{SA_{d2} / SA_2}{SA_{d1} / SA_1} \ x \ 100$$

11. Verfahren gemäß einem der vorhergehenden Ansprüche, **dadurch gekennzeichnet, dass** die genannte Transformation durch Blöcke bzw. mittels Blöcken eine lineare und orthogonale Transformation ist, insbesondere eine diskrete bzw. unstetige Cosinus-Transformation TCD oder eine diskrete bzw. unstetige Sinus-Transformation oder eine FourierTransformation oder eine Haar-Transformation oder eine Hadamar-Transformation oder eine Transformation nach de Slant.

12. Verfahren gemäß einem der Ansprüche 1 bis 10, **dadurch gekennzeichnet, dass** die genannte Transformation durch Blöcke bzw. mittels Blöcken eine Transformation in Wellungen (DWT) ist, deren Koeffizienten reorganisiert worden sind, um transformierte Blöcke zu erhalten.

## Claims

1. Method of evaluating the degradation of a video image coded by blocks of image points or pixels, this degradation being generated by a coding and/or storage and/or transmission system producing an output image on the basis of an input image, which includes the stages of:

    a) selecting an input image and determining a spatial activity (SA) of the input image in an analysis window representing at least one part of the image which exhibits a set of said blocks of image points or pixels, this determination implementing the following sub-stages:

        i) determining, for each block (n,m) of the said set of blocks of pixels, the transformed coefficients Fn,m (i,y) obtained via a block transform of the said blocks
        ii) determining, **characterized in that** it includes the following stages: via a combination of the transformed coefficients Fn,m (i,y), a parameter (bsa) representing the spatial activity of each block of the said set of blocks of pixels
        iii) determining, on the basis of the said parameter (bsa) representing the spatial activity of each block, an overall parameter ($SA_1$) representing the overall spatial activity of the set of the blocks of pixels constituting the analysis window, in order to qualify the richness of the input image

    b) selecting the output image corresponding to the input image and determining a said overall parameter ($SA_2$) representing the overall spatial activity of the output image in the said analysis window, in order to qualify the richness of the output image by implementing sub-stages a i) to a iii) for the output image
    c) comparing the said parameters representing the overall spatial activity ($SA_2$) of the output image in the analysis window and the overall spatial activity ($SA_1$) of the input image in the analysis window, in order to deduce an evaluation of the degradation from them.

2. Method according to Claim 1, **characterized in that** the parameter representing the spatial activity (bsa) of a block (n,m) is determined by the following formula:

$$bsa_{n,m} = \left( \sum_{i=0}^{7} \sum_{j=0}^{7} (k(i,j) \cdot F_{n,m}(i,j))^p \right) - (k(0,0) \cdot F_{n,m}(0,0))^p$$

**17**

in which k(i,j) is a constant coefficient for weighting the component i,j used, and p is a constant.

3. Method according to Claim 2, **characterized in that** the overall parameter representing the overall spatial activity (SA) of the set of the blocks is determined by the following formula:

$$SA = \overline{bsa_{n,m}} \approx \frac{1}{H \times W} \sum_{n=0}^{H-1} \sum_{m=0}^{W-1} bsa_{n,m}$$

$(H \times W)$ representing the number of blocks of pixels in the analysis window.

4. Method according to Claim 3, **characterized in that** the said comparison (stage c) is carried out with the aid of a parameter LR defined in the following way:

$$LR = gj[fi(SA_1/SA_2)] ) \text{ with } i,J \in \{1,2\}$$

with

$$fi(x,y) = x-y \text{ or } f2(x,y) = x/y$$

and

$$g1(x) = 100|x| \text{ or } g2(x) = 100|log(|x|)|$$

5. Method according to Claim 4, **characterized in that** it performs the calculation of the parameter LR over a sequence of M input images and of M corresponding output images, and **in that** it performs the calculation of an evaluation parameter or quality score MLR defined in the following way:

$$MLR = maximum_M (LR)$$

6. Method according to one of the preceding claims, **characterized in that** it includes the determination of a time-based activity indicator TA for a group of M images, determined in the following way:

$$TA = \sqrt{\sum_{u=0}^{M-1} F_{SA}^2 (u)}$$

$F_{SA}(u)$, for u varying from 0 to M-1, designating the M coefficients of a block transform applied to M time-based samples of the overall parameter representing the overall spatial activity (SA).

7. Method according to Claim 6, **characterized in that** it includes a stage of comparison of the time-based activity indicator TA with a given threshold $S_1$, so as to determine the presence of a break in or freezing of the image.

8. Method according to one of the preceding claims, **characterized in that** it includes the following stages, with a view to intrinsically determining the block effect:

d1) determining an overall parameter representing the overall spatial activity ($SA_{d2}$) of the output image in an offset analysis window exhibiting blocks of image points or pixels which are shifted by at least one pixel in the direction of the lines of the image and/or in a direction perpendicular to the direction of the lines of the image with respect to the said blocks of pixels of the said analysis window, this determination implementing the following sub-stages

i) applying the said block transform to each offset block (n,m) of the said set of blocks of pixels of the offset analysis window in order to determine the transformed coefficients $F_dn,m (i,j)$,

ii) determining, by a combination of the transformed coefficients $F_dn,m (i,j)$ of the offset blocks, a parameter ($bsa_d$) representing the spatial activity of each block of the said set of offset blocks,

iii) determining on the basis of the said parameter ($bsa_d$) representing the spatial activity of each block of the said set of offset blocks, an overall parameter representing the overall spatial activity ($sa_{d2}$) of the set of the offset blocks constituting the offset analysis window,

e1) comparing the said parameters representing the overall spatial activity ($SA_{d2}$) of the output image in the offset analysis window and the overall spatial activity ($SA_2$) of the output image in the analysis window.

9. Method according to one of the preceding claims, **characterized in that** it includes the following stages, with a view to determining the block effect:

d2) determining a parameter of overall spatial activity ($SA_{d1}$) of the input image in an offset analysis window, exhibiting blocks of image points or pixels which are offset by at least one pixel in the direction of the lines of the image and/or in a direction perpendicular to the direction of the lines of the image with respect to the said blocks of pixels of the said analysis window, this determination implementing the following sub-stages

i) applying a block transform to each offset block (n/m) of the said set of blocks of pixels of the offset analysis window in order to determine the transformed coefficients $F_dn,m (i,y)$,

ii) determining, by a combination of the transformed coefficients $F_dn,m (i,y)$ of the offset blocks, a parameter ($bsa_d$) representing the spatial activity of each block of the said set of offset blocks,

iii) determining, on the basis of the said parameter ($bsa_d$) representing the spatial activity of each block of the said set of offset blocks, a parameter representing the overall spatial activity ($SA_{d1}$) : of the set of offset blocks constituting the offset analysis window,

e) determining the parameter of spatial activity ($SA_{d2}$) of the output image in the said offset analysis window by implementing sub-stages $\underline{d_2}$ i) to $\underline{d}$ iii)

f) comparing, on the one hand, the parameters representing the spatial activity ($SA_{d2}$) of the output image in the offset analysis window and the spatial activity ($SA_2$) of the output image in the analysis window, in order to evaluate the block effect in the output image and, on the other hand, the parameters representing the spatial activity ($SA_{d1}$) of the input image in the offset analysis window and the spatial activity ($SA_1$) of the input image in the analysis window in order to evaluate the block effect in the input image.

10. Method according to Claim 9, **characterized in that** stage f implements the determination of a block-effect, indicator BM according to the following formula:

$$BM = \frac{SA_{d2} / SA_2}{SA_{d1} / SA_1} \times 100$$

11. Method according to one of the preceding claims, **characterized in that** the said block transform is a linear and orthogonal transform, especially a discrete cosine transform DCT or a discrete sine transform or a Fourier or Haar or Hadamar or Slant transform.

12. Method according to one of Claims 1 to 10, **characterized in that** the said block transform is a wavelet transform (DWT) the coefficients of which have been reorganized in order to obtain transformed blocks.

FIG.1

I

GAn,m    ZI    GDn,m

GA

GD

## FIG.2

SA

20000

10000

0

1          10          20          30          Image

## FIG.4a

SA

3000

2000

1000

0

## FIG.4b

100

20

0

F(o)    |    F(u)    F(l)

## FIG.4c

FIG.3

N° d' Image

BM

DEBIT:
— 9Mbits/s
— 6Mbits/s
— 4Mbits/s